# EUROPEAN PATENT APPLICATION

(11) **EP 2 063 477 A1**
(43) Date of publication of application: **27.05.2009**
(21) Application number: 07792622.8
(22) Date of filing: 17.08.2007
(51) Int. Cl.: H01M 8/02, H01M 8/04

(54) **FUEL CELL**

(30) Priority: 25.08.2006 JP 2006229253
(71) Applicant: Kabushiki Kaisha Toshiba, Minato-ku, Tokyo 105-8001 (JP)
(72) Inventor: YOSHIDA, Yuichi, Tokyo 105-8001 (JP); NEGISHI, Nobuyasu, Tokyo 105-8001 (JP); OOZU, Hideyuki, Tokyo 105-8001 (JP); YAJIMA, Akira, Tokyo 105-8001 (JP); AKAMOTO, Yukinori, Tokyo 105-8001 (JP)
(74) Representative: Henkel, Feiler & Hänzel
(86) International application number: PCT/JP2007/065998
(87) International publication number: WO 2008/023634

(57) **Abstract**

The fuel cell includes a membrane electrode assembly including a cathode catalyst layer, an anode catalyst layer and a proton conducting film provided between the cathode catalyst layer and the anode catalyst layer, a cathode conductive layer electrically connected to the cathode catalyst layer, an anode conductive layer electrically connected to the anode catalyst layer, a liquid fuel storage chamber which contains a liquid fuel, a gas-liquid separation film which selectively transmit a gasified component of the liquid fuel from the liquid fuel storage chamber to the anode catalyst layer, and a gasified fuel storage chamber formed at a section between the gas-liquid separation film and the anode conductive layer, and the distance L1 from the gas-liquid separation film to the anode conductive layer is set to 0 mm or more but 2 mm or less.

## Description

### Technical Field

The present invention relates to a flat-position type fuel cell which is effective for the operation of a mobile device.

### Background Art

Recently, various types of electronic devices such as personal computers and mobile telephones have been downsized further along with the development of the semiconductor technique and there have been attempts of using fuel cells for the power source of these small-sized devices. Fuel cells can generate power merely by supplying fuel and oxidizer thereto, and they have the advantage of being capable of generating power continuously by replenishing or replacing fuel only. Therefore, if they can be downsized, they will be an extremely useful system for the operation of mobile electronic devices. Especially, in the case of Direct Methanol Fuel Cell (DMFC), methanol, which has a high energy density, is used as the fuel and the electric current can be extracted directed from methanol on an electro-catalyst. For this reason, DMFC can be downsized, and the fuel is easy to handle as compared to the case of hydrogen gas fuel. Thus, DMFC holds great promise as a power source for small-sized devices. Therefore, there is a great demand that DMFC becomes practicable as the optimal power source for wireless mobile devices such as notebook personal computers, mobile telephones, mobile audio equipments and mobile game players.

There are mainly two methods of supplying fuel for the DMFC, one is a gas supplying method in which gasified liquid fuel is fed into a fuel cell with a blower or the like, and the other is a liquid supplying method in which liquid fuel is directly fed into a fuel cell with a pump or the like. The later method, the liquid supplying method further includes an internal gasification method in which fed portion of the liquid fuel is gasified within the cell and reacted in an anode catalyst layer of the membrane electrode assembly (MEA) so as to generate power. The internal gasification type DMFC is disclosed in, for example, PCT International Publication No. 2005/112172 A1.

However, in the conventional internal gasification type DMFC, if the gasified fuel storage chamber is formed excessively high, that is, the distance from the gas-liquid separation film to the membrane electrode assembly including the catalyst layer is excessively long, the reaction heat from the membrane electrode assembly does not easily propagate to the fuel tank, thereby making the gasification speed of the liquid fuel low. Accordingly, the amount of generation of the gasified fuel becomes excessively small, or the concentration thereof decreases, and thus there rises a possibility of the shortage of the output at the initial stage of the power generation.

Further, the capacity of the fuel tank becomes relatively large as compared to the capacity of the gas-fuel container chamber. This results in not only the increase in the dispersion of the amount of the fuel and quality (concentration) thereof, but also serving as a disadvantage when it is built as the power source in a small-sized electronic device such as a mobile device.

### Disclosure of Invention

The present invention has been proposed as a solution to the above-described drawbacks of the conventional technique, and an object thereof is to provide a small-sized and light-weight fuel cell which can exhibit a high initial output with a quick rise at the start.

According to the present invention, there is provided a fuel cell comprising a membrane electrode assembly including a cathode catalyst layer, an anode catalyst layer and a proton conducting film provided between the cathode catalyst layer and the anode catalyst layer, a cathode conductive layer electrically connected to the cathode catalyst layer, an anode conductive layer electrically connected to the anode catalyst layer, a liquid fuel storage chamber which contains a liquid fuel, a gas-liquid separation film which selectively transmit a gasified component of the liquid fuel from the liquid fuel storage chamber to the anode catalyst layer, and a gasified fuel storage chamber formed at a section between the gas-liquid separation film and the anode conductive layer, the fuel cell **characterized in that:** a distance L1 from the gas-liquid separation film to the anode conductive layer is set to 0 mm or more but 2 mm or less.

### Brief Description of Drawings

FIG. 1 is a perspective cross section showing an inside of a cell fuel according to the first embodiment;
FIG. 2 is a plan view showing the position of measurement of the distance between the gasification film and the catalyst layer;
FIG. 3 is a perspective cross section showing an inside of a cell fuel according to the second embodiment;
FIG. 4 is a perspective cross section showing an inside of a cell fuel according to the third embodiment; and
FIG. 5 is a diagram showing characteristic curves of the initial output, fuel concentration in the gasification chamber and temperature.

### Best Mode for Carrying Out the Invention

Various embodiments in which the present invention is carried out will now be described with reference to accompanying drawings.

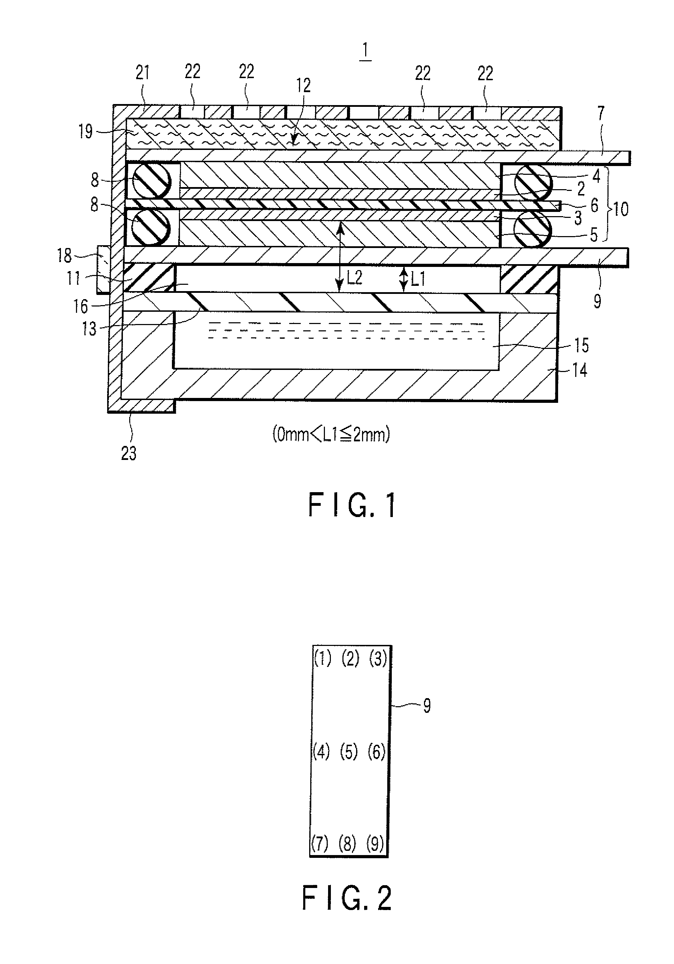

As shown in FIG. 1, a distance L1 from a gas-liquid separation film 13 to an anode conductive layer 9 is set to 0 mm or more but 2 mm or less (0 mm ≦ L ≦ 2 mm). With this structure, the quantity of heat of reaction which propagates from the power generation unit to a liquid fuel storage chamber 15 is increased, and the liquid fuel is quickly gasified. Thus, a high output can be obtained from the initial stage of the power generation. As the distance L1 is made shorter, such output characteristics of quicker rise are obtained. Especially, when the distance L1 from the gas-liquid separation film 13 to the anode conductive layer 9 is set to 2 mm, the highest initial output is obtained (TABLE 1). Further, when the distance L1 is set to zero and a gas diffusion layer 5 is eliminated to set the distance L2 to zero, or similarly, when the distance L1 is set to zero and the abode conductive layer 9 is implanted in the anode catalyst layer 3 so as to substantially eliminate the gas diffusion layer 5 by substituting the layer 5 with the gas-liquid separation film 13 or catalyst layer 3 to function, a higher initial output than that of the conventional case is obtained (TABLE 1). On the other hand, when the distance L1 exceeds 2 mm, the size of the cell becomes large, which is disadvantageous in terms of the object of using the cell for the built-in power source of the mobile device. Not only that, since the quantity of the heat propagating from the power generation unit to the liquid fuel storage chamber 15 becomes insufficient, thereby decreasing the gasification speed of the liquid fuel. As a result, the initial output decreases. For this reason, the present invention defines the distance L1 from the gas-liquid separation film 13 to the anode conductive layer 9 to a range of 0 mm or more and 2 mm or less.

### (First Embodiment)

The first embodiment of the present invention will now be described with reference to FIG. 1.

A fuel cell 1 is covered with an exterior case 21 to surround the outer side, and contains inside a plurality of electric cells arranged in the same plane and connected in series. The fuel cell 1 is prepared by caulking an end portion 23 of the exterior case 21 to an outer surface of a structural body 14 of the fuel container chamber as one unit in which a plurality of electric cells are connected in series and integrated. It should be noted that the exterior case 21 and the structural body 14 of the fuel container chamber can be calked together with a bolt and nut so as to be integrated together.

The fuel cell 1 includes a membrane electrode assembly 10 serving as the power generation unit, a cathode conductive layer 7 and an anode conductive layer 9, serving as a charge collector, a gas-liquid separation film 13, a fuel container structure body 14 serving as a liquid fuel space, a heat insulating member 18 and a moisture retention plate 19. The membrane electrode assembly 10 has such a structure that a proton conductive film 6 having a proton conductivity is interposed between the cathode catalyst layer 2 and anode catalyst layer 3, which are integrated into one unit by a heat press method, and further it includes on each side of the structure a cathode gas diffusion layer and an anode gas diffusion layer 5. Further, a cathode conductive layer 7 is connected to the cathode gas diffusion layer 4 of the membrane electrode assembly 10 and an anode conductive layer 9 is connected to the anode gas diffusion layer 5. The electric power generated by the power generating unit is output to a load, which is not shown in the figure, via a pair of these conductive layers 7 and 9.

It should be noted that in the fuel cell 1, it is desirable that a plurality of electric cells are formed as an integral unit and at least two of these cells are arranged in the same plane. In the case of mobile devices, the thickness is strictly limited, and there rises a similar demand in the fuel cell to be built therein. For this reason, it is difficult to employ the stack structure in which a plurality of electric cells are stacked one on another. Therefore, the flat arrangement structure in which cells are arranged on the same plane is employed. In this manner, a plurality of electric cells arranged flat are connected in series, thereby forming a battery.

Inside the fuel cell 1, various spaces and voids are formed by a plurality of O-rings serving as sealing members 8 and a rigid frame 11, which are sealed hermetically. Of these spaces and voids, for example, a space located on the cathode side is used as an air introduction unit including the moisture retention plate 19. On the other hand, a space located on the anode side is used as a gasification chamber 16 which communicates to the liquid fuel container 15 via the gas-liquid separation membrane 13.

In a main surface of the exterior case 21, a plurality of ventilation holes 22 are made at predetermined intervals of a pitch, each of which are connected to the moisture retention plate 19 inside. It is preferable that these ventilation holes 22 each have an opening of such a devised shape that which does not block the passing of the outside air but can avoid the entrance or contact of minute or needle-like foreign matters to the cathode gas diffusion layer 4 from the outside.

It should be noted that the moisture retention plate 19 is designed in order not to block the passing of air introduced via the ventilation holes 22 of the exterior cover 21. Further, it is also designed to feed water generated by the cathode catalyst layer 2 efficiently to the anode catalyst layer 3 via the proton conductive film 6 so as to utilize the water generated in the cathode catalyst layer 2 effectively in the reaction at the anode catalyst layer 3. For the moisture retention plate 19, it is preferable that a porous film having a porosity of, for example, 20 to 60% should be employed.

As the material for the exterior case 21, it is desirable that a metal material with an excellent anti-corrosion property, such as stainless steel or nickel, should be used. However, the material is not limited to the metal material, but also a resin material, more specifically, a hard-type resin which is not easily, for example, swelled by such a liquid fuel as polyetheretherketone (PEEK: tradename of Victorex PLC), polyphenylsulfide (PPS) or polyterafluoroethylene (PTFE) may be used.

The heat insulating member 18 is attached to a part of the outer surface of the exterior case 21, and thus the temperatures of the anode-side part of the power generating unit 10 and the gasification chamber 16 are maintained. For the heat insulating member 18, carbon fibers, glass fibers, resins and porous materials thereof can be used. It should be noted that in this embodiment, the heat insulating member 18 is provided on the outer surface of the exterior case 21, but it is also possible that the heat insulating member 18 is attached to an inner surface of the exterior case 21.

The gasification chamber 16 of a predetermined space is formed in order to extract electrons from the power generation unit on the anode conductive layer 9 as the anode lead and make it possible to utilize the energy of the power generation at a high efficiency. The gasification chamber 16 may be shaped into various forms such as rectangular, cylindrical and polygonal hollow beam. Of these, rectangular is preferable. This is because it is a shape which can ease the layout of the internal of the mobile device. The gasification chamber 16 is provided adjacent to the liquid fuel storage chamber 15, and these chambers 15 and 16 are partitioned from each other by the gas-liquid separation film 13. The gas-liquid separation film 13 is supported as the edge portion thereof is interposed between the rigid frame 11 and the flange of the fuel container structure body 14. The gas-liquid separation film 13 is made of a polytetrafluoroethylen (PTFE) sheet, which blocks the passing of liquid fuel (liquid methanol or an aqueous solution, etc.) and transmits gasified fuel (methanol gas, etc.).

The gasification chamber 16 is defined as it is surrounded by the exterior case 21, the anode conductive layer 9 and the gas-liquid separation film 13. The gas-liquid separation film 13 is provided close to the power generating unit such as to set the distance L1 from the gas-liquid separation film 13 to the anode conductive layer 9 of the power generation unit to 2 mm or less. As the distance L1 from the gas-liquid separation film 13 to the anode conductive layer 9 becomes shorter, it becomes easier for the reaction heat from the power generation unit to propagate to the liquid fuel in the liquid fuel storage chamber 15. As a result, the gasification speed of the liquid fuel is increased and thus a high initial output can be obtained. For example, when the thickness of the electrolytic film 6 is set to 10 to 100 µm, the thickness of the anode catalyst layer 3 is set to 50 to 100 µm, the thickness of the anode gas diffusion layer 5 is set to 250 to 400 µm and the thickness of the anode conductive layer 9 is set to 10 to 30 µm, it is preferable that the distance L1 from the gas-liquid separation film 13 to the anode conductive layer 9 becomes shorter should be set to 2 mm or less.

The anode conductive layer 9 includes a plurality of gasified fuel supply holes (not shown) opened therein. These gasified fuel supply holes each communicate to the side of the anode gas diffusion layer 3. When a portion of the liquid fuel in the liquid fuel storage chamber 15 is gasified, the gasified fuel enters the gasification chamber 16 via the gas-liquid separation film 13, and further introduced to the side of the anode catalyst layer 3 via the gasified fuel supply holes of the anode conductive layer 9 from the gasification chamber 16, thus contributing to the power generation reaction. It should be noted that for the anode conductive layer 9, a porous layer (such as mesh) or foil made of a metal material such as gold or nickel, or a composite material prepared by coating a conductive metal material such as stainless steel with a high electroconductive metal such as gold.

The liquid fuel storage chamber 15 has a fuel supply flow path (not shown) opened at an appropriate position, which communicates to a liquid inlet which is not shown in the figure. A bayonet coupler (key and keyway coupling type coupler), for example, is mounted to the liquid inlet. To the coupler, the nozzle of the fuel cartridge, which is not shown in the figure, is inserted, and the liquid fuel is supplied to the liquid fuel storage chamber 15.

It should be noted that the liquid fuel used in the present invention is not always limited to methanol fuels such as a methanol aqueous solution and pure methanol, but it is also possible to use, for example, ethanol fuels such as an ethanol aqueous solution and pure ethanol, propanol fuels such as a propanol aqueous solution and pure propanol, glycol fuels such as a glycol aqueous solution and pure glycol, ethylene glycol, dimethylether, formic acid, a formic acid aqueous solution, a sodium formate aqueous solution, a sodium borohydride aqueous solution, a potassium borohydride aqueous solution, a lithium borohydride aqueous solution or some other liquid fuel. Of these, the methanol aqueous solution is preferable since it has a carbon number of 1 and generates carbonate gas when it reacts, a power generating reaction can be carried out at a low temperature, and it can be produced relatively easily from an industrial waste. Further, fuels of various concentrations in a range from 100% to several percent can be used.

The liquid fuel storage chamber 15 is a space of a predetermined capacity, which is defined as surrounded by the exterior case 21 serving as a protection cover, and the liquid fuel storage chamber structural body 14. This space has a liquid inlet opened at an appropriate position, which is not shown in the figure. To the liquid inlet, a bayonet coupler is mounted, and the fuel supply hole is closed with the coupler except for the time when the fuel is supplied. This coupler on the main body side of the fuel cell is formed to have such a shape that it can engage hermetically with another coupler on a separate fuel cartridge side. For example, when the coupler on the fuel cartridge side is pushed into the coupler on the main body side of the fuel cell while a groove (not shown) of the coupler of the fuel cartridge side is engaged with a protrusion of the coupler on the main body side of the fuel cell, the built-in valve is opened to make the flow path on the cartridge side element communicate to the flow path on the main body side element of the fuel cell. Then, the liquid fuel (such as liquid methanol) flows into the liquid fuel storage chamber 15 from the liquid inlet through a conveyance tube by the internal pressure of the fuel cartridge.

Further, inside the liquid fuel storage chamber 15, a liquid fuel impregnating layer (not shown) is housed. It is preferable that the liquid fuel impregnating layer should be made of, for example, porous polyester fibers, porous fibers such as porous olefin-based resins or open-cell porous resin. With the liquid fuel impregnating layer, the fuel is uniformly supplied to the gas-liquid separation film even in the case where the amount of the liquid fuel in the fuel tank decreases, or where the main body of the fuel cell is inclined to bias the supply of the fuel on one side. As a result, it becomes possible to supply the gasified liquid fuel uniformly to the anode catalyst layer 3. Besides the polyester fiber, it may be made of one of various types of water absorbing polymers such as acrylic acid-based resin, or such a material that can retain liquid by utilizing the permeability of liquid, as sponge or an aggregate of fibers. This liquid fuel impregnating portion is effective for supplying an appropriate amount of fuel regardless of the position of the main body.

The proton conductive film 6 conveys protons generated in the anode catalyst layer 3 to the cathode catalyst layer 2, and it is made of a material which does not have an electron conductivity but can convey proton. For example, it is made of a polyperfluorosulfonic acid-based resin film, or more specifically, for example, Nafion Film of Du Pont, Flemion Film of Asahi Glass Co., Ltd. or Aciplex Film of Asahi Kasei Corporation. Besides the polyperfluorosulfonic acid-based resin film, the proton conductive film 6 may be made of a copolymer film of trifluorostylene derivative, polybenzimidazole film impregnated with phosphoric acid, aromatic polyetherketonesulfonic acid film or aliphatic hydrocarbonate resin film, which can convey protons.

The anode catalyst layer 3 serves to extract electrons and protons from fuel by oxidizing gasified fuel supplied via the gas diffusion layer 5. The anode catalyst layer 3 is made of, for example, carbon powder containing catalyst. Usable examples of the catalyst are fine particles of platinum (Pt), or fine particles of a transition metal such as iron (Fe), nickel (Ni), cobalt (Co), ruthenium (Ru) or molybdenum (Mo), or an oxide thereof or an alloy thereof. Here, the catalyst which is made of an alloy of ruthenium and platinum is preferable since it can prevent the deactivation of the catalyst due to adsorption of carbon monoxide (CO).

Further, it is preferable that the anode catalyst layer 3 should contain a resin used in the proteon conductive film 6. This is to facilitate the movement of protons generated. The anode gas diffusion layer 5 is made of a thin film of, for example, a porous carbon material, or more specifically, carbon paper or carbon fiber, or the like.

The cathode catalyst layer 2 serves to generate water by reducing oxygen and reacting electrons and protons generated in the anode catalyst layer 3, and it is made similarly to that of the anode catalyst layer 3 and anode gas diffusion layer 5 mentioned above. That is, the cathode has a laminate structure in which the cathode catalyst layer 3 made of carbon powder containing the catalyst and the cathode gas diffusion layer 5 of a porous carbon material are stacked one on another in the order from the side of the solid electrolytic film 11. The catalyst used in the cathode catalyst layer 2 is similar to that of the anode catalyst layer 3. The cathode catalyst layer 2 is similar to the anode catalyst layer 3 in the respect that the anode catalyst layer 3 contains in some cases a resin used for the proton conductive film 6.

The cathode conductive layer 7 functions as an anode lead which contacts and connects to the main surface of the cathode gas diffusion layer 4 to weave the power generating electrode. The cathode conductive layer 7 has a plurality of air introduction holes (not shown) opened therein. Through these air introduction holes, air is supplied to the cathode gas diffusion layer 4 from the ventilation holes 22 of the exterior case 21. The anode conductive layer 9 may be made of a porous layer (such as mesh) or foil made of a metal material such as gold or nickel, or a composite material prepared by coating a conductive metal material such as stainless steel with a high electroconductive metal such as gold.

The exterior case 21 and the fuel container chamber structural body 14 may be made of a metal material with an excellent anti-corrosion property, such as stainless steel or nickel. Here, it is desirable that they should be subjected to resin coating in order to prevent the elution of metal ions. It should be noted that they also may be made of a hard-type plastic which is not easily, for example, swelled by such a liquid fuel as polyetheretherketone (PEEK: tradename of Victorex PLC), polyphenylsulfide (PPS) or polyterafluoroethylene (PTFE).

According to this embodiment, the quantity of reaction heat propagating from the power generating unit 10 to the liquid fuel storage chamber 15 is increased to quickly gasify the liquid fuel in the initial stage of the power generation. In this manner, it is possible to obtain a higher initial output as compared to the conventional technique.

### (Second Embodiment)

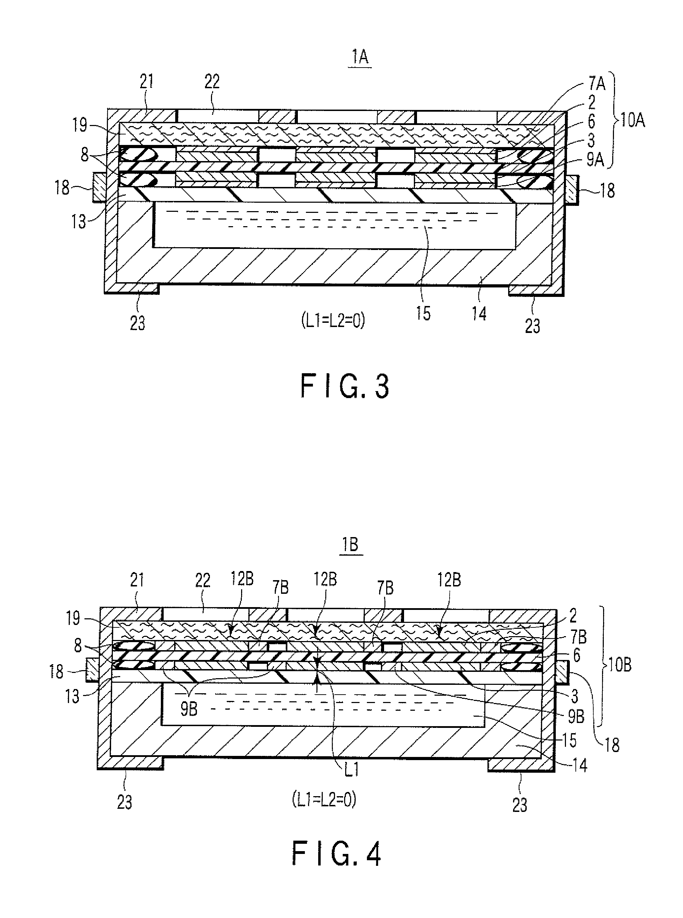

Next, the second embodiment of the present invention will now be described with reference to FIG. 3. It should be noted that the explanation on the portion of this embodiment which overlap with that of the above-described embodiment will be omitted.

According to this embodiment, a fuel cell 1A has such a structure that an anode conductive layer 9A is stacked on an anode catalyst layer 3. More specifically, the anode conductive layer 9A is stacked on the anode catalyst layer 3 in the following manner. That is, the anode catalyst layer 3 and the anode conductive layer 9A are each formed into a slender strip of an oblong shape, and the anode conductive layer 9A having substantially the same width as that of the anode catalyst layer 3 is placed thereon. Thus, an integrated catalyst layer-conductive layer assembly is formed. Similarly, on the cathode side, a cathode conductive layer 7A is stacked on a cathode catalyst layer 2.

When a gas-liquid separation film 13 is brought into direct contact with such a catalyst layer-conductive layer assembly, a distance L1 from the gas-liquid separation film 13 to the anode conductive layer 9A becomes zero. In this case, a distance L2 from the gas-liquid separation film 13 to the anode catalyst layer 3 becomes zero as well.

In a fuel cell, as the distance L2 becomes smaller, the output characteristics of quicker rise can be obtained. Here, if the distance L2 is zero as in the case of this embodiment, a high initial output can be obtained.

### (Third Embodiment)

Next, the third embodiment of the present invention will now be described with reference to FIG. 4. It should be noted that the explanation on the portion of this embodiment which overlap with that of the above-described embodiments will be omitted.

According to this embodiment, a fuel cell 1B has such a structure that an anode conductive layer 9B is arranged on the same plane as that of an anode catalyst layer 3.

More specifically, the anode conductive layer 9B is formed into slender strips of an oblong shape, and these strips are arranged in substantially parallel with each other at predetermined intervals on the anode catalyst layer 3. As, they are integrated with each other, a catalyst layer-conductive layer assembly is formed. Similarly, on the cathode side, strips of a cathode conductive layer 7B are integrated into the cathode catalyst layer 2. When a gas-liquid separation film 13 is brought into direct contact with such a catalyst layer-conductive layer assembly, a distance L1 from the gas-liquid separation film 13 to the anode conductive layer 9B becomes zero. In this case, a distance L2 from the gas-liquid separation film 13 to the anode catalyst layer 3 becomes zero as well.

In a fuel cell, as the distance L2 becomes smaller, the output characteristics of quicker rise can be obtained. Here, if the distance L2 is zero as in the case of this embodiment, a high initial output can be obtained.

Next, Examples 1 to 6 will now be described in comparison with Comparative Example 1 with reference to TABLE 1, FIGS. 2, 4 and 5.

### (Example 1)

As Example 1, the power was generated to obtain a constant voltage at room temperature, and the change of the cell output with time was measured during the power generation. At the same time, the temperature and internal pressure were monitored. Here, the temperature was measured at a position directly underneath the anode conductive layer 9. On the other hand, the pressure was measured at a position of the central portion of the gasified fuel storage chamber 5 when the distance L1 was more than zero, whereas when the distance L1 was zero, the pressure was measured at a position of the central portion of the gap between an adjacent pair of electric cells. Meanwhile, the concentration at a borderline position between the gasified fuel storage chamber 16 and the anode conductive layer 9 was calculated analytically.

### <Conditions>

Effective area of electric cell: 70 × 10 mm
Number of electric cells: 6 in series
Thickness of electrolytic film: 45 µm
Thickness of anode catalytic layer: 100 µm
Thickness of cathode catalytic layer: 100 µm
Thickness of anode gas diffusion layer: 350 µm
Thickness of cathode gas diffusion layer: 350 µm
Thickness of anode conductive layer: 80 µm
Thickness of cathode conductive layer: 80 µm
Distance L1: 2.0 mm
Distance L2: 2.43 mm

The thickness of each of the above-listed layers was expressed by an average of 10 measurement points.

Further, the distance L1 was expressed by an average of 9 measurement points (1) to (9) shown in FIG. 2. That is, the measurement point of the distance L1 is an average of the values obtained at positions corresponding to 4 corner portions (1), (3), (7) and (9) of the anode conductive layer 9, middle points (2), (4), (6) and (8) of the four sides, and a central portion (5). The distance L1 and L2 can be obtained by measuring a cross section taken by, for example, a cutting process.

### (Example 2)

As Example 2, fuel cells which satisfied the conditions specified below were each continuously subjected to power generation, and the temperature and the internal pressure of the membrane electrode assembly were measured. At the same time, the long-term output was measured. The results were shown in TABLE 1 in relative values.

### <Conditions>

Effective area of electric cell: 70 × 10 mm
Number of electric cells: 6 in series
Thickness of electrolytic film: 45 µm
Thickness of anode catalytic layer: 100 µm
Thickness of cathode catalytic layer: 100 µm
Thickness of anode gas diffusion layer: 350 µm
Thickness of cathode gas diffusion layer: 350 µm
Thickness of anode conductive layer: 80 µm
Thickness of cathode conductive layer: 80 µm
Distance L1: 0.5 mm
Distance L2: 0.93 mm

### (Example 3)

As Example 3, fuel cells which satisfied the conditions specified below were each continuously subjected to power generation, and the temperature and the internal pressure of the membrane electrode assembly were measured. At the same time, the long-term output was measured. The results were shown in TABLE 1 in relative values.

### <Conditions>

Effective area of electric cell: 70 × 10 mm
Number of electric cells: 6 in series
Thickness of electrolytic film: 45 µm
Thickness of anode catalytic layer: 100 µm
Thickness of cathode catalytic layer: 100 µm
Thickness of anode gas diffusion layer: 350 µm
Thickness of cathode gas diffusion layer: 350 µm
Thickness of anode conductive layer: 80 µm
Thickness of cathode conductive layer: 80 µm
Distance L1: 1.0 mm
Distance L2: 1.43 mm

### (Example 4)

As Example 4, fuel cells which satisfied the conditions specified below were each continuously subjected to power generation, and the temperature and the internal pressure of the membrane electrode assembly were measured. At the same time, the long-term output was measured. The results were shown in TABLE 1 in relative values.

### <Conditions>

Effective area of electric cell: 70 × 10 mm
Number of electric cells: 6 in series
Thickness of electrolytic film: 45 µm
Thickness of anode catalytic layer: 100 µm
Thickness of cathode catalytic layer: 100 µm
Thickness of anode gas diffusion layer: 350 µm
Thickness of cathode gas diffusion layer: 350 µm
Thickness of anode conductive layer: 80 µm
Thickness of cathode conductive layer: 80 µm
Distance L1: 1.5 mm
Distance L2: 1.90 mm

### (Example 5)

As Example 5, fuel cells which satisfied the conditions specified below were each continuously subjected to power generation, and the temperature and the internal pressure of the membrane electrode assembly were measured. At the same time, the long-term output was measured. The results were shown in TABLE 1 in relative values.

### <Conditions>

Effective area of electric cell: 70 × 10 mm
Number of electric cells: 6 in series
Thickness of electrolytic film: 45 µm
Thickness of anode catalytic layer: 100 µm
Thickness of cathode catalytic layer: 100 µm
Thickness of anode gas diffusion layer: 350 µm
Thickness of cathode gas diffusion layer: 350 µm
Thickness of anode conductive layer: 80 µm
Thickness of cathode conductive layer: 80 µm
Distance L1: 1.9 mm
Distance L2: 2.33 mm

### (Example 6)

As Example 6, fuel cells which satisfied the conditions specified below were each continuously subjected to power generation, and the temperature and the internal pressure of the membrane electrode assembly were measured. At the same time, the long-term output was measured. The results were shown in TABLE 1 in relative values.

### <Conditions>

Effective area of electric cell: 70 × 10 mm
Number of electric cells: 6 in series
Thickness of electrolytic film: 45 µm
Thickness of anode catalytic layer: 100 µm
Thickness of cathode catalytic layer: 100 µm
Thickness of anode gas diffusion layer: 350 µm
Thickness of cathode gas diffusion layer: 350 µm
Thickness of anode conductive layer: 80 µm
Thickness of cathode conductive layer: 80 µm
Distance L1: zero
Distance L2: 0.43 mm

### (Comparative Example 1)

As Comparative Example 1, fuel cells which satisfied the conditions specified below were each continuously subjected to power generation, and the temperature and the internal pressure of the membrane electrode assembly were measured. At the same time, the long-term output was measured. The results were shown in TABLE 1 in relative values.

### <Conditions>

Effective area of electric cell: 70 × 10 mm
Number of electric cells: 6 in series
Thickness of electrolytic film: 45 µm
Thickness of anode catalytic layer: 100 µm
Thickness of cathode catalytic layer: 100 µm
Thickness of anode gas diffusion layer: 350 µm
Thickness of cathode gas diffusion layer: 350 µm
Thickness of anode conductive layer: 80 µm
Thickness of cathode conductive layer: 80 µm
Distance L1: 5.0 mm
Distance L2: 5.43 mm

**TABLE 1**

| | Distance from catalyst layer to gasification film L2 (mm) | Distance from conductive layer to gasification film L1 (mm) | Initial output (relative value) |
|---|---|---|---|
| Example 1 | 2.43 | 2 | 100 |
| Example 2 | 0.93 | 0.5 | 85 |
| Example 3 | 1.43 | 1 | 90 |
| Example 4 | 1.93 | 1.5 | 95 |
| Example 5 | 2.33 | 1.9 | 98 |
| Example 6 | 0.43 | 0 | 83 |
| Comparative Example 1 | 5.43 | 5 | 80 |

As shown in TABLE 1, it was observed (as in Examples 1 to 6) that when the distance L1 was 2 mm, the initial output became the maximum, and as the distance L1 was shortened, the initial output was gradually decreased. Further, it was also confirmed (as in Comparative Example 1) that the distance L1 became large as 5 mm, the initial output became lower.

It should be noted that in the case where the result of the concentration of the gasified fuel in Comparative Example 1 was set to a reference value of 1, the concentration of the gasified fuel in Example 1 was 1.20, which is higher than that of Comparative Example 1. Further, the temperature of the gasification chamber of Example 1 was 1.25, which was higher than that of Comparative Example 1. Based on these, it was confirmed that in Example 1, the gasification speed of the fuel in the initial stage of the power generation was high, and also the reaction heat was quickly propagated to the gasification chamber.

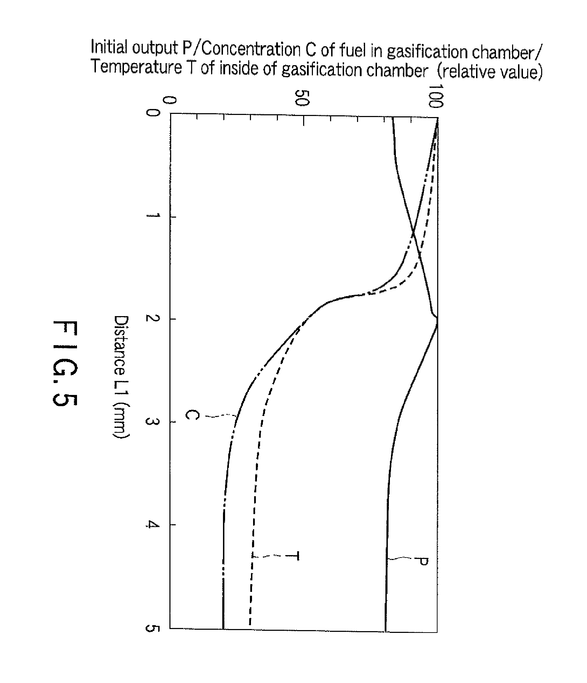

FIG. 5 is a characteristic curve diagram which illustrates the results of the investigation on the influence of the distance L1 on various characteristics, with the horizontal axis indicating the distance L1 (mm) from the gas-liquid separation film to the charge collector, and the vertical axis indicating the initial output (relative value), the concentration of the fuel in the gasification chamber (relative value), and the temperature of the inside of the gasification chamber (relative value). In this figure, characteristic curve P (solid line) represents the initial output characteristics, characteristic curve C (chain double-dashed line) represents the concentration of the fuel in the gasification chamber, and characteristic curve T (dashed line) represents the temperature of the inside of the gasification chamber. The initial output is a relative value when the output of the fuel cell at a distance L1 of 2 mm was set to a reference value (100). Each of the concentration of the fuel in the gasification chamber and the temperature of the inside of the gasification chamber is a relative value when the output of the fuel cell at a distance L1 of 0 mm was set to a reference value (100).

As is clear from this figure, the initial output P takes the maximum value when the distance L1 is close to 2 mm. Each of the concentration of the fuel in the gasification chamber and the temperature of the inside of the gasification chamber has a tendency to decrease as the distance L1 increases. Further, when the distance L1 exceeds 2 mm, the concentration and temperature abruptly decrease. When focusing on the initial output solely, those with a distance L1 of more than 2 mm appear to be usable. However, as indicated by both characteristic curves C and T, since the concentration of the fuel in the gasification chamber and the temperature of the inside of the gasification chamber abruptly decrease, the status of the fuel supply may become unstable, which leads to the decrease in the output stability. Under these circumstances, in consideration of the balance between the initial output and the output stability, the appropriate range of the distance L1 is 2 mm or less.

According to the present invention, the anode catalyst layer is positioned close to the gas-liquid separation film. With this structure the reaction heat easily propagates to the liquid fuel storage chamber, and therefore the liquid fuel is quickly gasified, making it possible to obtain a high output from the initial stage of the power generation. Thus, it is possible to achieve output characteristics of quick rise at the start as the power source for wireless mobile devices such as notebook personal computers, mobile telephones, mobile audio equipments and mobile game players.

It should be noted that the present invention is not limited to the above-described embodiment as it is, and when practicing the invention, it can be embodied while the structural elements are modified as long as the essence of the invention remains within the scope thereof. Further, various modified versions of the invention can be formed by combining some of the structural elements disclosed in the above embodiments as needed. For example, some of the structural elements may be deleted from the entire structure presented in the embodiment. Further, structural elements of difference embodiments may be combined as needed.

For example, in the explanations provided above, the fuel cells have such a structure that the fuel reservoir portion is provided in a bottom section of the membrane electrode assembly (MEA); however it is also possible that the supply of the fuel from the fuel container to the MEA is mediated by a flow path. Further, the above-provided embodiments were explained in connection with the case of a passive-type fuel cell; however, it is also possible to apply the present invention to an active type or semi-passive type fuel cell. It should be noted here that the semi-passive type fuel cell is a fuel-cell of a system which supplies liquid fuel by utilizing the force of capillary action and mechanical driving force. In the semi-passive type fuel cell, the fuel is supplied from the fuel container to the MEA, where it is consumed by the power generating reaction, and is never returned to the fuel container. As described, in the semi-passive type fuel cell, the fuel is not circulated within the system, and in this respect, it is different from the active type. Further, the semi-passive type fuel cell does not compromise the downsizing of the device. Further, the semi-passive type fuel cell employs a pump for supplying the fuel, and in this respect, it is different also from a pure-passive type fuel cell (of such a system that the fuel is supplied solely with the force of the capillary action.) Note that in the semi-passive type fuel cell, it suffices only if the cell has such a structure that the fuel is supplied from the fuel container to the MEA, and it is even possible to use a shut-off valve in place of the pump. The shut-off valve controls in an ON/OFF manner the flow of the liquid fuel by the force of capillary action. The fuel supplied to the MEA may be supplied entirely in the form of vapor, or it may be supplied partially in the form of liquid, but even in that case, the present invention can be applied.

## Claims

1. A fuel cell comprising a membrane electrode assembly including a cathode catalyst layer, an anode catalyst layer and a proton conducting film provided between the cathode catalyst layer and the anode catalyst layer, a cathode conductive layer electrically connected to the cathode catalyst layer, an anode conductive layer electrically connected to the anode catalyst layer, a liquid fuel storage chamber which contains a liquid fuel, a gas-liquid separation film which selectively transmit a gasified component of the liquid fuel from the liquid fuel storage chamber to the anode catalyst layer, and a gasified fuel storage chamber formed at a section between the gas-liquid separation film and the anode conductive layer, the fuel cell **characterized in that:**
a distance L1 from the gas-liquid separation film to the anode conductive layer is set to 0 mm or more but 2 mm or less.

2. The fuel cell according to claim 1, **characterized in that** the gasified fuel storage chamber is formed into a rectangular shape.

3. The fuel cell according to claim 1, **characterized in that** a plurality of electric cells are formed as an integral unit, and at least two of the plurality of electric cells are arranged in the same plane.

4. The fuel cell according to claim 1, **characterized by** further comprising sealing members which seal portions of a side wall of the gasified fuel storage chamber which are brought into contact with the gas-liquid separation membrane and the anode conductive layer.

5. The fuel cell according to claim 1, **characterized in that** an outer surface of a side wall of the gasified fuel storage chamber is covered with a heat insulating member for heat insulation.

6. The fuel cell according to claim 1, **characterized in that** the liquid fuel is a methanol aqueous solution having a concentration of more than 50% by mol or liquid methanol.
